# EUROPÄISCHE PATENTSCHRIFT

(11) **EP 1 122 424 B1**
(45) Veröffentlichungstag und Bekanntmachung des Hinweises auf die Patenterteilung: **24.11.2004**
(21) Anmeldenummer: 01101907.2
(22) Anmeldetag: 27.01.2001
(51) Int. Cl.: F02M 63/02, F02D 41/20, F02D 41/40, F02D 41/38

(54) **Verfahren und Einrichtung zum ansteuern eines elektromagnetischen Mengensteuerventils**
Process and device for controlling an electromagnetic control valve
Procédé et dispositif pour commander une vanne électromagnétique de régulation

(30) Priorität: 05.02.2000 DE 10005212
(43) Veröffentlichungstag der Anmeldung: 08.08.2001
(73) Patentinhaber: ROBERT BOSCH GMBH, 70442 Stuttgart (DE)
(72) Erfinder: Rembold, Helmut, 70435 Stuttgart (DE); Teegen, Walter, 71336 Waiblingen (DE); Mentgen, Dirk, 71701 Schwieberdingen (DE); Mueller, Uwe, 71282 Hemmingen (DE); Binder, Helmut, 74172 Neckarsulm (DE)

(56) Entgegenhaltungen:
- US-A- 5 878 718
- US-A- 5 947 090

## Beschreibung

### Stand der Technik

Die vorliegenden Erfindung betrifft ein Verfahren und eine Einrichtung zum Ansteuern eines elektromagnetischen Mengensteuerventils zur Bedarfssteuerung einer Hochdruckpumpe eines Kraftstoffversorgungssystems einer Brennkraftmaschine, siehe US 5 878 718 A.

Das Kraftstoffversorgungssystem ist bspw. als ein Common-Rail-Kraftstoff-Direkteinspritzungssystem mit einer Vorförderpumpe und einer bedarfsgesteuerten bzw. bedarfsgeregelten Hochdruckpumpe ausgebildet. Die Vorförderpumpe (z.B. eine Elektrokraftstoffpumpe) fördert Kraftstoff aus einem Kraftstoff-Vorratsbehälter und erzeugt einen relativ niedrigen Vordruck (z.B. 4 bar) in einem Niederdruckbereich des Kraftstoffversorgungssystems. Die Hochdruckpumpe fördert den Kraftstoff aus dem Niederdruckbereich in einen Hochdruckbereich des Kraftstoffversorgungssystems, wo der Kraftstoff mit einem relativ hohen Einspritzdruck (z.B. 200 bar bei Benzin-Kraftstoff oder 1500 bar bei Diesel-Kraftstoff) in einem Hochdruckspeicher, dem sog. Rail, anliegt. Von dem Hochdruckspeicher zweigen mehrere betriebsgrößenabhängig ansteuerbare Einspritzventile ab, die bei entsprechender Ansteuerung Kraftstoff aus dem Hochdruckspeicher mit dem dort anliegenden Einspritzdruck in den Brennraum der Brennkraftmaschine einspritzen. Aus dem Hochdruckspeicher zweigt außerdem eine Druckbegrenzungsleitung ab, die über ein Druckbegrenzungsventil in den Niederdruckbereich des Kraftstoffversorgungssystems auf der Einlassseite der Hochdruckpumpe mündet. Schließlich ist in dem Hochdruckspeicher ein Drucksensor angeordnet, durch den der in dem Hochdruckspeicher herrschende Einspritzdruck ermittelt und in ein entsprechendes elektrisches Signal umgewandelt wird, das an ein Steuergerät der Brennkraftmaschine geleitet wird. Aus dem Niederdruckbereich des Kraftstoffversorgungssystems zweigt eine Niederdruckleitung ab und führt über einen Niederdruckregler zurück in den Kraftstoffvorratsbehälter.

Die Hochdruckpumpe des Common-Rail-Kraftstoff-Direkteinspritzungssystems weist ein Einlassventil auf der Niederdruckseite und ein Auslassventil auf der Hochdruckseite auf. Zwischen der Hochdruckpumpe und dem Auslassventil zweigt eine Bypassleitung ab, in der das Mengensteuerventil angeordnet ist, und mündet auf der Niederdruckseite der Hochdruckpumpe noch vor dem Einlassventil in den Einlass der Hochdruckpumpe. Das Mengensteuerventil dient zur Bedarfssteuerung der Hochdruckpumpe. Die Bedarfssteuerung erfolgt durch Variation des Förderendes der Hochdruckpumpe. Ein vorzeitiges Öffnen des Mengensteuerventils bzw. ein Ansteuern des Mengensteuerventils vor dem Ende des Förderhubs führt zu einem vorzeitigen Förderende. Durch Ansteuern des Mengensteuerventils wird die Bypassleitung geschlossen, bei nicht angesteuertem Mengensteuerventil ist die Bypassleitung geöffnet. Die Ansteuerung des Mengensteuerventils erfolgt über ein aus dem Einspritzdruck des Hochdruckspeichers abgeleitetes Ansteuersignal.

Nach dem Stand der Technik wird das Ansteuersignal für das Mengensteuerventil von einer stromgeregelten Endstufe erzeugt. Durch die Endstufe werden die digitalen Steuerimpulse des Steuergeräts der Brennkraftmaschine in ein analoges Ansteuersignal für das Mengensteuerventil verstärkt. Die digitalen Steuerimpulse werden aus einem überlagerten Regelkreis für den Einspritzdruck in dem Hochdruckspeicher abgeleitet. Der durch die Magnetspule des Mengensteuerventils fließende Steuerstrom wird durch die Stromregelung der stromgeregelten Endstufe auf einen vorgegebbaren Wert geregelt. Der Nachteil einer stromgeregelten Endstufe besteht insbesondere darin, dass sie relativ aufwendig im Aufbau und relativ teuer ist.

Deshalb besteht die Aufgabe der vorliegenden Erfindung darin, die Ansteuerung eines elektromagnetischen Mengensteuerventils auf eine möglichst einfache und kostengünstige Art zu ermöglichen.

Zur Lösung dieser Aufgabe schlägt die Erfindung ausgehend von dem Verfahren zum Ansteuern eines elektromagnetischen Mengensteuerventils der eingangs genannten Art vor, dass das Mengensteuerventil über eine Schaltendstufe nach dem Einschalten der Zündung der Brennkraftmaschine zu bestimmten Zeitpunkten für eine bestimmte Zeitdauer mit Impulsen angesteuert wird.

### Vorteile der Erfindung

Eine Schaltendstufe ist wesentlich einfacher aufgebaut und deshalb auch wesentlich kostengünstiger als eine stromgeregelte Endstufe. Bei einer Schaltendstufe wird der durch die Magnetspule des Mengensteuerventils fließende Steuerstrom nicht geregelt. Deshalb kann es bei niedrigen Temperaturen dazu kommen, dass der Steuerstrom auf Grund der Reduzierung des Widerstands der Magnetspule des Mengensteuerventils so stark ansteigt, dass die Abschaltenergie aus dem Magnetkreis zur Zerstörung der Endstufe führt. Um dies zu vermeiden ist es denkbar, die Magnetspule'des Mengensteuerventils aus Messing zu fertigen, da der Widerstand von Messing weniger temperaturabhängig ist. Ebenso ist es denkbar, parallel zu der Magnetspule eine Diode oder einen Widerstand zu schalten, um einen bestimmten Anteil der Abschaltenergie noch in dem Magnetkreis abzubauen, bevor sie die Endstufe erreicht. Diese Maßnahmen sind jedoch mit Mehrkosten verbunden.

Erfindungsgemäß wird deshalb zur Vermeidung einer Zerstörung der Endstufe durch die Abschaltenergie aus dem Magnetkreis das Mengensteuerventil unterhalb einer kritischen Temperatur mit Impulsen angesteuert. Durch diese Ansteuerung mit Impulsen wird die Magnetspule des Mengensteuerventils erwärmt, der Widerstand der Magnetspule steigt an und der Steuerstrom sinkt auf einen Wert, bei dem die Abschaltenergie aus dem Magnetkreis nicht zu einer Zerstörung der Endstufe führt. Die erfindungsgemäße Ansteuerung des Mengensteuerventils lässt sich ohne zusätzliche Bauteile bei Mengensteuerventilen üblicher Bauart besonders kostengünstig realisieren.

Bei der Ansteuerung des Mengensteuerventils mit Impulsen sollten zwei Punkte berücksichtigt werden. Zum einen sollte der während der Ansteuerung des Mengensteuerventils mit Impulsen durch die Magnetspule fließende Steuerstrom stets unterhalb eines Maximalwertes bleiben. Der Maximalwert ist der Wert des Steuerstroms, bei dem die Abschaltenergie aus dem Magnetkreis zu einer Zerstörung der Endstufe führen kann. Zum anderen sollte sich der auf der Hochdruckseite der Hochdruckpumpe herrschende Druck durch die Ansteuerung des Mengensteuerventils mit Impulsen nicht bzw. lediglich kurzzeitig geringfügig ändern.

Die Ansteuerung des Mengensteuerventils mit Impulsen kann bei dem Start der Brennkraftmaschine, unmittelbar nach dem Einschalten der Zündung der Brennkraftmaschine beginnen. Nach dem Einschalten der Zündung wird zunächst die Vorförderpumpe in Betrieb genommen und der Vordruck in dem Kraftstoffversorgungssystem aufgebaut. Später wird dann der Anlasser der Brennkraftmaschine betätigt und die Drehzahl der Brennkraftmaschine steigt langsam bis auf die Leerlaufdrehzahl an. Erst danach wird die Mengensteuerung der Hochdruckpumpe eingeleitet und durch die Hochdruckpumpe der Hochdruck in dem Kraftstoffversorgungssystem aufgebaut.

Gemäß einer vorteilhaften Weiterbildung der vorliegenden Erfindung wird vorgeschlagen, dass das Mengensteuerventil. während der Saugphase der Hochdruckpumpe mit Impulsen einer bestimmten Impulsdauer und einer bestimmten Impulsfrequenz angesteuert wird, wobei die Impulsdauer und die Impulsfrequenz derart gewählt werden, dass der durch die Magnetspule des Mengensteuerventils fließende Steuerstrom stets unterhalb seines Maximalwertes bleibt. Dadurch wird erreicht, dass auch während der Ansteuerung des Mengensteuerventils mit Impulsen die auftretende Abschaltenergie aus dem Magnetkreis stets innerhalb eines zulässigen Bereichs liegt und nicht zu einer Zerstörung der Endstufe führt. Das Mengensteuerventil ist üblicherweise stromlos öffnend ausgebildet. Die Ansteuerung des Mengensteuerventils führt zu einem Schließen der Bypassleitung von dem Hochdruckbereich zu dem Niederdruckbereich der Hochdruckpumpe. Da die Hochdruckpumpe während der Saugphase jedoch keinen Kraftstoff in den Hochdruckbereich fördert, steigt der auf der Hochdruckseite der Hochdruckpumpe herrschende Einspritzdruck auf Grund der Ansteuerung des Mengensteuerventils nicht an.

Die Impulsdauer der Impulse, mit denen das Mengensteuerventil angesteuert wird, wird vorzugsweise als eine Funktion der Umgebungstemperatur und der Spannung der Fahrzeugbatterie ermittelt. Sowohl die Umgebungstemperatur als auch die Spannung der Fahrzeugbatterie liegen als Kenngröße in dem Steuergerät der Brennkraftmaschine vor und können ohne weiteres zur Ermittlung der Impulsdauer herangezogen werden. Die Impulsdauer wird vorzugsweise derart gewählt., dass der Spulenwiderstand nach einer bestimmten Ansteuerdauer einen vorgegebenen Widerstandswert erreicht. Das entsprechende Kennfeld der Impulsdauer in Abhängigkeit von Umgebungstemperatur und Batteriespannung kann über applikationsspezifische Messungen ermittelt werden.

Gemäß einer anderen vorteilhaften Weiterbildung der vorliegenden Erfindung wird vorgeschlagen, dass das Mengensteuerventil während der Förderphase der Hochdruckpumpe mit Impulsen einer bestimmten Impulsdauer und einer bestimmten Impulsfrequenz angesteuert wird, wobei die Impulsdauer und die Impulsfrequenz derart gewählt werden, dass der auf der Hochdruckseite der Hochdruckpumpe herrschende Druck nicht ansteigt.

Gemäß noch einer anderen vorteilhaften Weiterbildung der vorliegenden Erfindung wird vorgeschlagen, dass das Mengensteuerventil nach Erreichen der Leerlaufdrehzahl der Brennkraftmaschine für eine bestimmte Ansteuerdauer dauerangesteuert wird. Sinnvollerweise erfolgt die Daueransteuerung des Mengensteuerventils nur in dem Fall, dass die Magnetspule des Mengensteuerventils trotz der vorangegangenen Ansteuerung mit Impulsen noch nicht auf eine vorgegebene Temperatur erwärmt ist, d. h. der Spulenwiderstand noch unterhalb eines vorgegebenen Widerstandwertes liegt. Die Daueransteuerung des Mengensteuerventils erfolgt etwa 0,5 bis 1 Sekunde nach dem Erreichen der Leerlaufdrehzahl. Auf Grund der Daueransteuerung der Mengensteuerventils ist die Bypassleitung von dem Hochdruckbereich in den Niederdruckbereich ständig geschlossen. Dadurch steigt der Einspritzdruck auf der Hochdruckseite der Hochdruckpumpe während der Ansteuerdauer bis zum Erreichen eines von dem Druckbegrenzungsventil des Hochdruckspeichers vorgegebenen Maximalwert stetig an. Während der Daueransteuerung des Mengensteuerventils wird die Hochdruckpumpe also nicht bedarfsgesteuert betrieben.

Die Ansteuerdauer des Mengensteuerventils wird vorzugsweise als eine Funktion der Umgebungstemperatur und der Spannung der Fahrzeugbatterie ermittelt. Der Spulenwiderstand ist beim Kaltstart eine Funktion der Umgebungstemperatur. Die Ansteuerdauer wird vorzugsweise derart gewählt, dass der Spulenwiderstand nach der Ansteuerung einen vorgegebenen Widerstandswert erreicht.

Gemäß einer bevorzugten Ausführungsform der vorliegenden Erfindung wird vorgeschlagen, dass die Ansteuerung mit den Impulsen bzw. die Daueransteuerung des Mengensteuerventils beendet wird, sobald der Spulenwiderstand einen vorgegebenen Widerstandswert überschritten hat. Dies kann wiederum über applikationsspezifische Messungen bei vorgegebenem Ansteuerverfahren erkannt werden. Der vorgegebene Widerstandswert wird so groß gewählt, dass der durch die Magnetspule fließende Steuerstrom so klein ist, dass die Abschaltenergie aus dem Magnetkreis mit Sicherheit nicht zu einer Zerstörung der Endstufe führt.

Die erfindungsgemäße Ansteuerung des Mengensteuerventils über die Schaltendstufe ermöglicht eine Auslegung bezüglich der Schaltzeit des elektromagnetischen Mengensteuerventils, die den bedarfsgesteuerten Betrieb bis zu einer maximalen Grenzdrehzahl erlaubt. Werden Drehzahlen der Brennkraftmaschine oberhalb der Grenzdrehzahl mit dann noch kürzeren Schaltzeiten des Mengensteuerventils gefordert, kann dies dadurch realisiert werden, dass gemäß einer vorteilhaften Weiterbildung der vorliegenden Erfindung das Mengensteuerventil bei einer Drehzahl der Brennkraftmaschine oberhalb einer vorgegebenen Grenzdrehzahl dauerangesteuert wird. Die Einstellung des auf der Hochdruckseite der Hochdruckpumpe herrschenden Einspritzdrucks erfolgt dann ausschließlich über das mechanische Druckbegrenzungsventil in dem Hochdruckspeicher. Gemäß dieser Weiterbildung herrscht also ab der vorgegebenen Grenzdrehzahl ein durch das Druckbegrenzungsventil vorgegebener maximaler Einspritzdruck in dem Hochdruckspeicher des Kraftstoffversorgungssystems.

Gemäß einer bevorzugten Ausführungsform der vorliegenden Erfindung wird vorgeschlagen, dass die Grenzdrehzahl bei einer Drehzahl von 6.800 U/min gewählt wird. Es hat sich gezeigt, dass bei einer Ansteuerung des Mengensteuerventils über eine Schaltendstufe ohne weiteres Schaltzeiten realisiert werden können, die den bedarfsgesteuerten Betrieb bis zu einer maximalen Drehzahl der Brennkraftmaschine von ca. 6.500 bis 6.800 U/min erlauben.

Alternativ wird vorgeschlagen, dass die Grenzdrehzahl als eine Funktion der Spannung der Fahrzeugbatterie ermittelt wird. Für eine an einer Fahrzeugbatterie üblicherweise verfügbare Spannung von etwa 14 V liegt die Grenzdrehzahl bei etwa 6800 U/min. Bei einer niedrigeren Batteriespannung, die bspw. auf Grund von Defekten oder Überlastungen im Bordnetz des Kraftfahrzeugs auftreten kann, verlängert sich die Schaltzeit des Mengensteuerventils sowie die Zeit zum Aufbau einer Magnetkraft in dem Mengensteuerventil. Das führt dazu, dass bei einer niedrigen Batteriespannung ein bedarfsgesteuerter Betrieb nur bis zu Drehzahlen von unterhalb 6.800 U/min möglich ist. Durch eine niedriegere Spannung der Fahrzeugbatterie verringert sich somit auch die Grenzdrehzahl entsprechend.

Gemäß einer bevorzugten Ausführungsform der vorliegenden Erfindung wird vorgeschlagen, dass das Mengensteuerventil bei einer Drehzahl der Brennkraftmaschine oberhalb der Grenzdrehzahl im Anschluss an die Förderphase der Hochdruckpumpe für eine bestimmte Taktdauer mit einer bestimmten Taktfrequenz getaktet angesteuert wird. Dadurch können die relativ hohen Temperaturen der Magnetspule des Mengensteuerventils aufgrund der Daueransteuerung bei Drehzahlen der Brennkraftmaschine oberhalb der Grenzdrehzahl reduziert werden. Eine Beeinträchtigung der Funktion des Mengensteuerventils auf Grund des mit der steigenden Temperatur der Magnetspule ansteigenden Spulenwiderstands (z.B. nicht ausreichender Magnetkraftaufbau) kann auf diese Weise verhindert werden. Die eigentliche Förderphase der Hochdruckpumpe während des Förderhubs ist in der Regel noch vor Erreichen des oberen Totpunktes abgeschlossen. Die Taktdauer kann von dem Abschluss der Förderphase bis in den Saughub hinein über den oberen Totpunkt hinaus reichen. Während der Taktdauer kann das Mengensteuerventil mit mehreren Takten einer bestimmten Taktfrequenz angesteuert werden. Die Taktdauer gibt also die Zeitdauer an, während der das Mengensteuerventil getaktet angesteuert wird. Die Taktfrequenz gibt an, mit wieviel Takten pro Sekunde das Mengensteuerventil angesteuert wird. Je höher die Taktfrequenz gewählt wird, desto feiner können die Takte an die Taktdauer angepasst werden.

Gemäß einer bevorzugten Ausführungsform der vorliegenden Erfindung wird vorgeschlagen, dass die Taktdauer und/oder die Taktfrequenz als eine Funktion der Drehzahl der Brennkraftmaschine ermittelt wird. Vorzugsweise wird die Taktdauer bei steigender Drehzahl der Brennkraftmaschine kleiner gewählt. Die Taktfrequenz wird dagegen bei steigender Drehzahl der Brennkraftmaschine vorzugsweise größer gewählt.

Als eine weitere Möglichkeit zur Absenkung der Leistungsaufnahme bzw. der Temperatur der Magnetspule des Mengensteuerventils wird gemäß einer anderen bevorzugten Ausführungsform der vorliegenden Erfindung vorgeschlagen, dass das Mengensteuerventil in der Förderphase der Hochdruckpumpe nach einer bestimmten Förderdauer mit einer bestimmten Taktfrequenz getaktet angesteuert wird. Der auf der Hochdruckseite der Hochdruckpumpe herrschende Einspritzdruck weist zu Beginn der Förderphase nach dem Durchlaufen des unteren Totpunkts auf Grund der Beschleunigung der Flüssigkeitssäule zunächst einen dynamischen Überschwinger auf, der sich nach der bestimmten Förderdauer auf einen Wert von etwas oberhalb des Einspritzdrucks einpendelt. Während der bestimmten Förderdauer muss an der Magnetspule des Mengensteuerventils zum Halten des Überschwingers ein relativ hoher Steuerstrom anliegen. Nach dem Abklingen des Überschwingers, d. h. nach der bestimmten Förderdauer, kann der durch die Magnetspule des Mengensteuerventils fließende Steuerstrom verringert werden. Der Steuerstrom wird auf einen Wert verringert, der ausreichend groß ist, um den auf der Hochdruckseite der Hochdruckpumpe nach dem Abklingen des Überschwingers anliegenden Druck zu halten. Zur Verringerung des Steuerstroms wird dieser mit einer bestimmten Taktfrequenz getaktet. Genauer gesagt, wird die Größe des Steuerstroms durch ein gesteuertes Takten mit einem unsymmetrischen Taktverhältnis variiert.

Die bestimmte Förderdauer wird vorteilhafterweise als eine Funktion der Drehzahl der Brennkraftmaschine ermittelt. Die Amplitude des dynamischen Überschwingers des auf der Hochdruckseite der Hochdruckpumpe anliegenden Einspritzdrucks nimmt mit steigender Drehzahl der Brennkraftmaschine zu. Somit steigt mit steigender Drehzahl auch die Förderdauer an, die nach dem Durchlaufen des unteren Totpunkts verstreicht, bis sich der Druck auf der Hochdruckseite der Hochdruckpumpe auf den Wert knapp oberhalb des Einspritzdrucks eingependelt hat.

Es ist denkbar, die Taktfrequenzen über eine Kennfeldsteuerung vorzugeben. Gemäß einer bevorzugten Ausführungsform der vorliegenden Erfindung wird jedoch vorgeschlagen, dass die Taktfrequenzen über eine adaptive Regelung unter Einbeziehung des auf der Hochdruckseite der Hochdruckpumpe herrschenden Drucks eingestellt werden. Aus einer Abfrage des Druckniveaus in dem Hochdruckspeicher des Kraftstoffversorgungssystems kann somit abgeleitet werden, ob das Mengensteuerventil während der Förderphase ausreichend geschlossen ist oder nicht. Die Taktfrequenzen für die getaktete Ansteuerung des Mengensteuerventils können dann so eingestellt werden, dass der in dem Hochdruckspeicher herrschende Einspritzdruck auf einen vorgebbaren Sollwert geregelt wird.

Zur Reduzierung der Leistungsaufnahme der Hochdruckpumpe in einem Drehzahlbereich der Brennkraftmaschine oberhalb der vorgegebenen Drehzahl wird gemäß einer bevorzugten Ausführungsform der vorliegenden Erfindung vorgeschlagen, dass der Ansaugquerschnitt eines Einlassventils der Hochdruckpumpe zumindest bei einer Drehzahl der Brennkraftmaschine oberhalb der vorgegebenen Grenzdrehzahl derart ausgebildet wird, dass ein Saugdrosseleffekt auftritt, der ungefähr dem Liefergradabfall des Motors im oberen Drehzahlbereich entspricht. Dadurch wird das Fördervolumen und die Antriebsleistung der Hochdruckpumpe abgesenkt.

Als eine weitere Lösung der Aufgabe der vorliegenden Erfindung wird ausgehend von der Einrichtung zum Ansteuern eines elektromagnetischen Mengensteuerventils der eingangs genannten Art vorgeschlagen, dass die Einrichtung eine Schaltendstufe zum Ansteuern des Mengensteuerventils nach dem Einschalten der Zündung der Brennkraftmaschine zu bestimmten Zeitpunkten für eine bestimmte Zeitdauer mit Impulsen aufweist.

Gemäß einer vorteilhaften Weiterbildung der vorliegenden Erfindung wird vorgeschlagen, dass die Einrichtung Mittel zur Durchführung des Verfahrens nach einem der Ansprüche 1 bis 18 aufweist.

### Zeichnungen

Ein bevorzugtes Ausführungsbeispiel der vorliegenden Erfindung wird im Folgenden an Hand der Zeichnungen näher erläutert. Es zeigen:
- Fig. 1: ein Common-Rail-Kraftstoffversorgungssystem mit einem Mengensteuerventil, das gemäss einem erfindungsgemäßen Verfahren angesteuert wird;
- Fig. 2: Schaltstellungen des Mengensteuerventils des Kraftstoffversorgungssytems aus Fig. 1;
- Fig. 3: einen Verlauf der Steuerspannung des Mengensteuerventils während einer erfindungsgemäßen Ansteuerung gemäß einer ersten Ausführungsform und entsprechenden Verlauf des Einspritzdrucks;
- Fig. 4: einen Verlauf der Steuerspannung des Mengensteuerventils während einer erfindungsgemäßen Ansteuerung gemäß einer zweiten Ausführungsform und entsprechenden Verlauf des Einspritzdrucks; und
- Fig. 5: einen Verlauf der Steuerspannung des Mengensteuerventils während einer erfindungsgemäßen Ansteuerung gemäß einer dritten Ausführungsform und entsprechenden Verlauf des Einspritzdrucks.

### Beschreibung der Ausführungsbeispiele

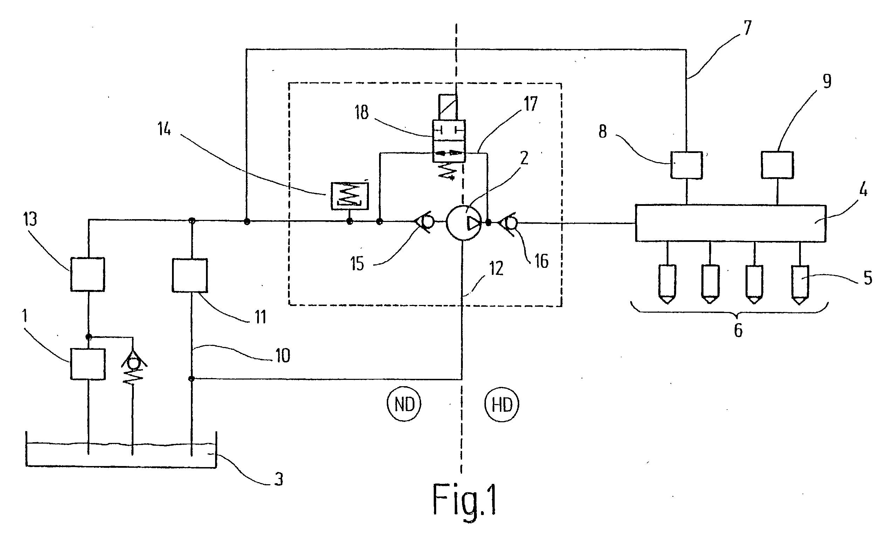

In Fig. 1 ist ein als Common-Rail-Direkteinspritzungssystem ausgebildetes Kraftstoffversorgungssystem dargestellt. Das Common-Rail-Kraftstoff-Direkteinspritzungssystem weist eine Vorförderpumpe 1 und eine bedarfsgesteuerte bzw. bedarfsgeregelte Hochdruckpumpe 2 auf. Die Vorförderpumpe 1 ist als eine Elektrokraftstoffpumpe ausgebildet und fördert Kraftstoff aus einem Kraftstoff-Vorratsbehälter 3. Die Vorförderpumpe 1 erzeugt einen relativ niedrigen Vordruck (z.B. 4 bar) in einem Niederdruckbereich ND des Kraftstoffversorgungssystems. Die Hochdruckpumpe 2 ist als eine 1-Zylinderpumpe ausgebildet. Sie fördert den Kraftstoff aus dem Niederdruckbereich ND in einen Hochdruckbereich HD des Kraftstoffversorgungssystems, wo der Kraftstoff mit einem relativ hohen Einspritzdruck p_Ein (z.B. 200 bar bei Benzin-Kraftstoff oder 1500 bar bei Diesel-Kraftstoff) in einem Hochdruckspeicher 4, dem sog. Rail, anliegt. Von dem Hochdruckspeicher 4 zweigen vier betriebsgrößenabhängig ansteuerbare Einspritzventile 5 ab, die bei entsprechender Ansteuerung Kraftstoff aus dem Hochdruckspeicher 4 mit dem dort anliegenden Einspritzdruck p_Ein in den Brennraum 6 der Brennkraftmaschine einspritzen.

Aus dem Hochdruckspeicher 4 zweigt außerdem eine Druckbegrenzungsleitung 7 ab, die über ein Druckbegrenzungsventil 8 in den Niederdruckbereich ND des Kraftstoffversorgungssystems auf der Einlassseite der Hochdruckpumpe 2 mündet. Schließlich ist in dem Hochdruckspeicher 4 ein Drucksensor 9 angeordnet, durch den der in dem Hochdruckspeicher 4 herrschende Einspritzdruck p_Ein ermittelt und in ein entsprechendes elektrisches Signal umgewandelt wird, das an ein Steuergerät (nicht dargestellt) der Brennkraftmaschine geleitet wird.

Aus dem Niederdruckbereich ND des Kraftstoffversorgungssystems zweigt eine Niederdruckleitung 10 ab und führt über einen Niederdruckregler 11 zurück in den Kraftstoff-Vorratsbehälter 3. Über eine Leckageleitung 12 kann Lecköl von der Hochdruckpumpe 2 zurück in den Kraftstoff-Vorratsbehälter 3 fließen. Zwischen der Vorförderpumpe 1 und der Hochdruckpumpe 2 ist ein Filter 13 angeordnet. Zum Glätten von Schwankungen des Vordrucks ist in dem Niederdruckbereich ND ein Druckdämpfungsglied 14 angeordnet.

. Die Hochdruckpumpe 2 des Common-Rail-Direkteinspritzungssystems weist ein Einlassventil 15 auf der Niederdruckseite ND und ein Auslassventil 16 auf der Hochdruckseite HD auf. Der Ansaugquerschnitt des Einlassventils 15 der Hochdruckpumpe 2 ist derart ausgebildet, dass bei hohen Drehzahlen ein Saugdrosseleffekt auftritt. Dadurch wird das Fördervolumen und die Antriebsleistung der Hochdruckpumpe abgesenkt. Zwischen der Hochdruckpumpe 2 und dem Auslassventil 16 zweigt eine Bypassleitung 17 ab, in der ein Mengensteuerventil 18 angeordnet ist, und mündet auf der Niederdruckseite ND der Hochdruckpumpe 2 noch vor dem Einlassventil 15 in die Hochdruckpumpe 2. Das Mengensteuerventil 18 dient zur Bedarfssteuerung der Hochdruckpumpe 2.

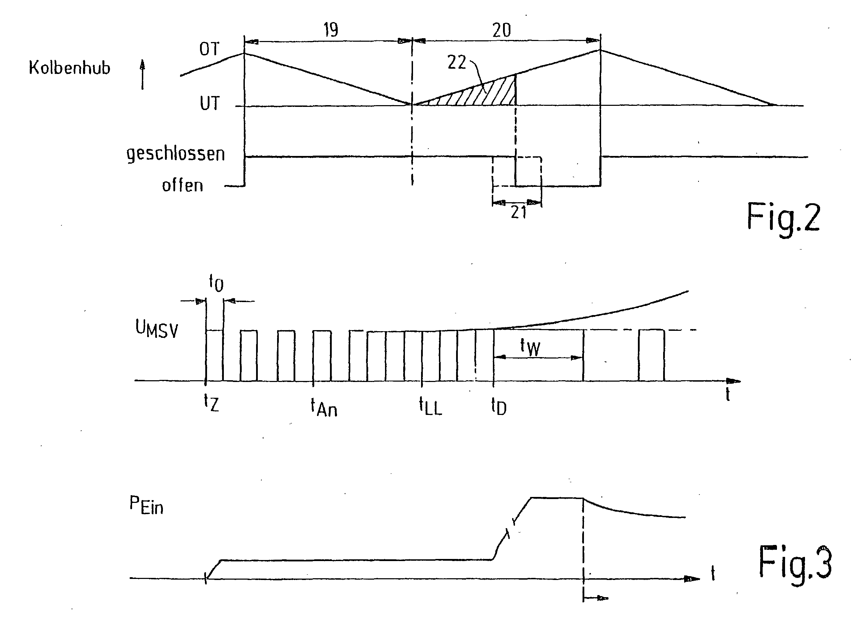

Die Bedarfssteuerung erfolgt durch Variation des Förderendes der Hochdruckpumpe 2. In Fig. 2 sind die Betriebszustände (Saughub 19, Förderhub 20) der Hochdruckpumpe 2 und in Abhängigkeit davon die Stellung des Mengensteuerventils 18 dargestellt. Während des Saughubs 19 bewegt sich der Pumpenkolben von dem oberen Totpunkt OT zu dem unteren Totpunkt UT und es wird Kraftstoff aus dem Niederdruckbereich ND über das Einlassventil 15 in den Pumpenraum der Hochdruckpumpe 2 gesaugt. Während des Förderhubs 20 bewegt sich der Pumpenkolben von dem unteren Totpunkt UT zu dem oberen Totpunkt OT. Das Einlassventil 15 ist geschlossen und der Kraftstoff in dem Pumpenraum wird komprimiert. Übersteigt der Druck in dem Pumpenraum den Öffnungsdruck des Auslassventils 16 wird der Kraftstoff in den Hochdruckbereich HD gefördert. Während der in Fig. 2 schraffiert gezeichneten Förderphase 22 wird Kraftstoff in den Hochdruckbereich HD gefördert. Ein vorzeitiges Öffnen des Mengensteuerventils 18 bzw. ein Ansteuern des Mengensteuerventils 18 vor dem Ende der Förderphase 22 führt zu einem vorzeitigen Förderende. Die Variation der Öffnungszeit des Mengensteuerventils 18 ist in Fig. 2 mit dem Bezugszeichen 21 bezeichnet. Durch Ansteuern des Mengensteuerventils 18 wird die Bypassleitung 17 geschlossen, bei nicht angesteuertem Mengensteuerventil 18 ist die Bypassleitung 17 geöffnet. Die Ansteuerung des Mengensteuerventils 18 erfolgt über ein aus dem Einspritzdruck p_Ein des Hochdruckspeichers 4 abgeleitetes Ansteuersignal.

In Fig. 3 ist das erfindungsgemäße Verfahren zum Ansteuern des Mengensteuerventils 18 gemäß einer ersten Ausführungsform dargestellt. Das Mengensteuerventil 18 wird über eine Schaltendstufe (nicht dargestellt) nach dem Einschalten der Zündung der Brennkraftmaschine zum Zeitpunkt t_Z mit Impulsen angesteuert. Die pulsförmige Ansteuerspannung U_MSV ist in der oberen Hälfte von Fig. 3 dargestellt. Der entsprechende Einspritzdruck p_Ein in dem Hochdruckspeicher 4 ist in der unteren Hälfte dargestellt. Durch den Einsatz einer Schaltendstufe wird der Aufbau einer Einrichtung zum Ansteuern des Mengensteuerventils 18 vereinfacht und die Fertigungskosten können reduziert werden. Die Ansteuerung mit Impulsen bewirkt eine möglichst rasche Erwärmung der Magnetspule des Mengensteuerventils 18, was zu einer Erhöhung des Spulenwiderstands, zu einer Verringerung des durch die Magnetspule fließenden Steuerstroms auf einen Wert, bei dem die Abschaltenergie aus dem Magnetkreis nicht zu einer Zerstörung der Schaltendstufe führt.

Genauer gesagt, wird das Mengensteuerventil 18 während der Saugphase der Hochdruckpumpe 2 mit Impulsen einer bestimmten Impulsdauer t_0 und einer bestimmten Impulsfrequenz angesteuert. Die Impulsdauer t_0 und die Impulsfrequenz werden derart gewählt, dass der durch die Magnetspule des Mengensteuerventils 18 fließende Steuerstrom stets unterhalb seines Maximalwertes bleibt. Dadurch wird erreicht, dass auch während der Ansteuerung des Mengensteuerventils 18 mit Impulsen die auftretende Abschaltenergie aus dem Magnetkreis stets innerhalb eines zulässigen Bereichs liegt und nicht zu einer Zerstörung der Schaltendstufe führt.

Das Mengensteuerventil 18 ist üblicherweise stromlos öffnend ausgebildet.'Die Ansteuerung des Mengensteuerventils 18 führt zu einem Schließen der Bypassleitung 17 von dem Hochdruckbereich HD zu dem Niederdruckbereich ND der Hochdruckpumpe 2. Da die Hochdruckpumpe 2 während des Saughubs 19 keinen Kraftstoff in den Hochdruckbereich HD fördert, steigt der auf der Hochdruckseite HD der Hochdruckpumpe 2 herrschende Einspritzdruck p_Ein auf Grund der Ansteuerung des Mengensteuerventils 18 nicht an.

Das Mengensteuerventil 18 kann des Weiteren auch während der Förderphase 22 der Hochdruckpumpe 2 mit Impulsen einer bestimmten Impulsdauer t_0 und einer bestimmten Impulsfrequenz angesteuert werden. Die Impulsdauer t_0 und die Impulsfrequenz werden derart gewählt, dass der auf der Hochdruckseite HD der Hochdruckpumpe 2 herrschende Druck nicht oder lediglich kurzzeitig geringfügig ansteigt. Das ist bspw. dann der Fall, wenn die Impulsdauer t_0 kurz und die Impulsfrequenz niedrig gewählt wird, d. h. wenn das Mengensteuerventil 18 in großen zeitlichen Abständen mit kurzen Impulsen angesteuert wird.

Die Impulsdauer t_0 wird vorzugsweise derart gewählt, dass der Spulenwiderstand nach einer bestimmten Ansteuerdauer einen vorgegebenen Widerstandswert erreicht. Bei dem Ausführungsbeispiel aus Fig. 3 weisen die Impulse, mit denen das Mengensteuerventil 18 während der Saugphase, und die Impulse, mit denen das Megensteuerventil 18 während der Förderphase 22 angesteuert wird, die gleiche Impulsdauer t_0 auf. Das muss jedoch nicht so sein. Es ist insbesondere denkbar, dass die Impulse während der Saugphase eine längere Impulsdauer aufweisen als die Impulse während der Förderphase 22.

Nach dem Einschalten der Zündung zum Zeitpunkt t_Z wird zunächst die Vorförderpumpe 1 in Betrieb genommen und der Vordruck in dem Kraftstoffversorgungssystem aufgebaut. Später wird dann zum Zeitpunkt t_An der Anlasser der Brennkraftmaschine betätigt und die Drehzahl der Brennkraftmaschine steigt bis auf die Leerlaufdrehzahl zum Zeitpunkt t_LL an. Erst danach wird die Mengensteuerung der Hochdruckpumpe 2 eingeleitet und durch die Hochdruckpumpe 2 der Hochdruck in dem Kraftstoffversorgungssystem aufgebaut.

Falls die Magnetspule des Mengensteuerventils 18 trotz der vorangegangenen Ansteuerung mit Impulsen nach Erreichen der Leerlaufdrehzahl noch nicht auf eine vorgegebene Temperatur erwärmt ist, d. h. der Spulenwiderstand noch unterhalb eines vorgegebenen Widerstandwertes liegt, wird das Mengensteuerventil 18 nach Erreichen der Leerlaufdrehzahl der Brennkraftmaschine für eine bestimmte Ansteuerdauer t_W dauerangesteuert. Die Daueransteuerung des Mengensteuerventils erfolgt zu einem Zeitpunkt t_D, der etwa 0,5 bis 1 Sekunde nach dem Erreichen der Leerlaufdrehzahl zum Zeitpunkt t_LL liegt.

Auf Grund der Daueransteuerung der Mengensteuerventils 18 ist die Bypassleitung 17 von dem Hochdruckbereich HD in den Niederdruckbereich ND ständig geschlossen. Dadurch steigt der Einspritzdruck p_Ein in dem Hochdruckspeicher 4 während der Ansteuerdauer t_W bis zum Erreichen eines von dem Druckbegrenzungsventil 8 des Hochdruckspeichers 4 vorgegebenen Maximalwert stetig an. Während der Daueransteuerung des Mengensteuerventils 18 wird die Hochdruckpumpe 2 also nicht bedarfsgesteuert betrieben.

Die Ansteuerung des Mengensteuerventils 18 mit den Impulsen bzw. die Daueransteuerung wird vorzugsweise beendet, sobald der Spulenwiderstand einen vorgegebenen Widerstandswert überschritten hat, wobei der Spulenwiderstand über ein applikationsspezifisches Kennfeld auf Basis der Identifikationsgrößen Batteriespannung und Umgebungstemperatur ermittelt wird.

Die erfindungsgemäße Ansteuerung des Mengensteuerventils 18 über die Schaltendstufe ermöglicht eine Auslegung bezüglich der Schaltzeit des elektromagnetischen Mengensteuerventils 18, die den bedarfsgesteuerten Betrieb bis zu einer maximalen Grenzdrehzahl erlaubt. Werden Drehzahlen der Brennkraftmaschine oberhalb der Grenzdrehzahl mit dann noch kürzeren Schaltzeiten des Mengensteuerventils 18 gefordert, kann dies dadurch realisiert werden, dass das Mengensteuerventil 18 bei einer Drehzahl der Brennkraftmaschine oberhalb einer vorgegebenen Grenzdrehzahl dauerangesteuert wird.

Die Einstellung des auf der Hochdruckseite HD der Hochdruckpumpe 2 herrschenden Einspritzdrucks p_Ein erfolgt dann ausschließlich über das mechanische Druckbegrenzungsventil 8 in dem Hochdruckspeicher 4. Gemäß dieser Weiterbildung herrscht also ab der vorgegebenen Grenzdrehzahl ein durch das Druckbegrenzungsventil 8 vorgegebener maximaler Einspritzdruck in dem Hochdruckspeicher 4 des Kraftstoffversorgungssystems.

Die Grenzdrehzahl wird vorzugsweise bei einer Drehzahl von 6.800 U/min gewählt. Alternativ kann die Grenzdrehzahl als eine Funktion der Spannung der Fahrzeugbatterie ermittelt werden. Für eine an einer Fahrzeugbatterie üblicherweise verfügbare Spannung von etwa 14 V liegt die Grenzdrehzahl bei etwa 6800 U/min. Bei einer niedrigeren Batteriespannung, die bspw. auf Grund von Defekten oder Überlastungen im Bordnetz des Kraftfahrzeugs auftreten kann, ist ein bedarfsgesteuerter Betrieb nur bis zu Drehzahlen von unterhalb 6.800 U/min möglich. Durch eine niedriegere Spannung der Fahrzeugbatterie verringert sich somit auch die Grenzdrehzahl entsprechend.

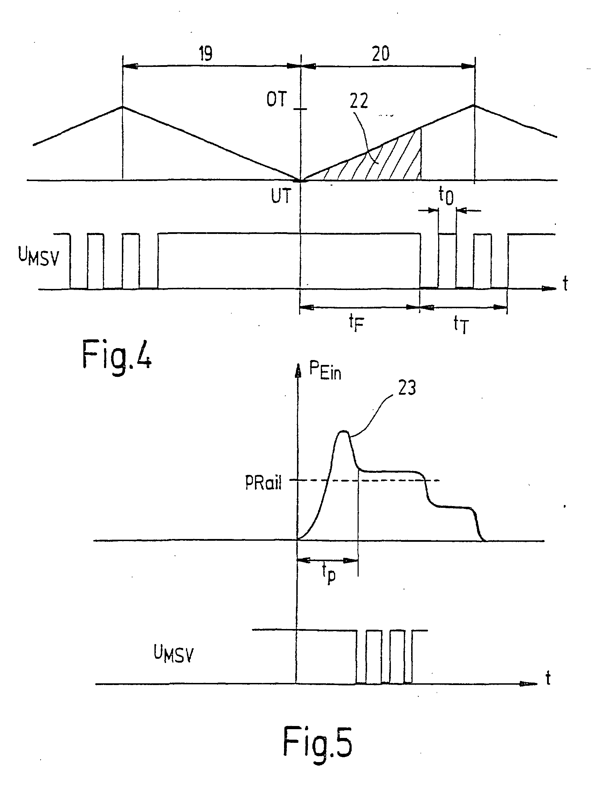

Des Weiteren wird das Mengensteuerventil 18 bei einer Drehzahl der Brennkraftmaschine oberhalb der Grenzdrehzahl im Anschluss an die Förderphase 22 der Hochdruckpumpe 2 für eine bestimmte Taktdauer t_T mit einer bestimmten Taktfrequenz getaktet angesteuert (vgl. Fig. 4). Dadurch können die relativ hohen Temperaturen der Magnetspule des Mengensteuerventils 18 aufgrund der Daueransteuerung bei Drehzahlen der Brennkraftmaschine oberhalb der Grenzdrehzahl reduziert werden. Eine Beeinträchtigung der Funktion des Mengensteuerventils 18 auf Grund des mit der steigenden Temperatur der Magnetspule ansteigenden Spulenwiderstands (z.B. nicht ausreichender Magnetkraftaufbau) kann auf diese Weise verhindert werden. Die eigentliche Förderphase 22 der Hochdruckpumpe 2 während des Förderhubs 20 ist in der Regel noch vor Erreichen des oberen Totpunktes OT abgeschlossen. Die Taktdauer kann von dem Abschluss der Förderphase 22 bis in den Saughub 19 hinein über den oberen Totpunkt OT hinaus reichen. Während der Taktdauer kann das Mengensteuerventil 18 mit mehreren Takten einer bestimmten Taktfrequenz angesteuert werden. Die Taktdauer gibt also die Zeitdauer an, während der das Mengensteuerventil 18 getaktet angesteuert wird. Die Taktfrequenz gibt an, mit wieviel Takten pro Sekunde das Mengensteuerventil 18 angesteuert wird. Je höher die Taktfrequenz gewählt wird, desto feiner können die Takte an die Taktdauer angepasst werden.

Vorzugsweise wird die Taktdauer bei steigender Drehzahl der Brennkraftmaschine kleiner gewählt. Die Taktfrequenz wird dagegen bei steigender Drehzahl der Brennkraftmaschine vorzugsweise größer gewählt.

Als eine weitere Möglichkeit zur Absenkung der Leistungsaufnahme bzw. der Temperatur der Magnetspule des Mengensteuerventils 18 wird vorgeschlagen, dass das Mengensteuerventil 18 in der Förderphase 22 der Hochdruckpumpe 2 nach einer bestimmten Förderdauer t_P mit einer bestimmten Taktfrequenz getaktet angesteuert wird (vgl. Fig. 5). Der auf der Hochdruckseite HD der Hochdruckpumpe 2 herrschende Einspritzdruck p_Ein weist zu Beginn der Förderphase 22 nach dem Durchlaufen des unteren Totpunkts UT auf Grund der Beschleunigung der Flüssigkeitssäule zunächst einen dynamischen Überschwinger 23 auf, der sich nach der bestimmten Förderdauer t_P auf einen Wert von etwas oberhalb des Einspritzdrucks p_Rail einpendelt.

Während der bestimmten Förderdauer t_P muss an der Magnetspule des Mengensteuerventils 18 ein relativ hoher Steuerstrom zum Halten des Überschwingers 23 anliegen. Nach dem Abklingen des Überschwingers 23, d. h. nach der bestimmten Förderdauer t_P, kann der durch die Magnetspule des Mengensteuerventils fließende Steuerstrom verringert werden. Der Steuerstrom wird auf einen Wert verringert, der ausreichend groß ist, um den auf der Hochdruckseite HD der Hochdruckpumpe 2 nach dem Abklingen des Überschwingers 23 anliegenden Einspritzdruck p_Ein zu halten. Zur Verringerung des Steuerstroms wird dieser mit einer bestimmten Taktfrequenz getaktet. Genauer gesagt, wird die Größe des Steuerstroms durch ein gesteuertes Takten mit einem unsymmetrischen Taktverhältnis variiert.

Es ist denkbar, die Taktfrequenzen für die Ansteuerung des Mengensteuerventils 18 über eine Kennfeldsteuerung vorzugeben. Vorzugsweise wird die Taktfrequenzen jedoch über eine adaptive Regelung unter Einbeziehung des auf der Hochdruckseite HD der Hochdruckpumpe 2 herrschenden Drucks eingestellt. Aus einer Abfrage des Druckniveaus in dem Hochdruckspeicher 4 des Kraftstoffversorgungssystems über den Drucksensor 9 kann somit abgeleitet werden, ob das Mengensteuerventil 18 während der Förderphase 22 ausreichend geschlossen ist oder nicht. Die Taktfrequenzen für die getaktete Ansteuerung des Mengensteuerventils 18 können dann so eingestellt werden, dass der in dem Hochdruckspeicher 4 herrschende Einspritzdruck p_Ein auf einen vorgebbaren Sollwert geregelt wird.

## Patentansprüche

1. Verfahren zum Ansteuern eines elektromagnetischen Mengensteuerventils (18) zur Bedarfssteuerung einer Hochdruckpumpe (2) eines Kraftstoffversorgungssystems einer Brennkraftmaschine, **dadurch gekennzeichnet, dass** das Mengensteuerventil (18) über eine Schaltendstufe nach dem Einschalten der Zündung der Brennkraftmaschine zu bestimmten Zeitpunkten für eine bestimmte Zeitdauer mit Impulsen angesteuert wird.

2. Verfahren nach Anspruch 1, **dadurch gekennzeichnet, dass** das Mengensteuerventil (18) während der Saugphase der Hochdruckpumpe (2) mit Impulsen einer bestimmten Impulsdauer (t_0) und einer bestimmten Impulsfrequenz angesteuert wird, wobei die Impulsdauer (t_0) und die Impulsfrequenz derart gewählt werden, dass der durch die Magnetspule des Mengensteuerventils (18) fließende Steuerstrom stets unterhalb seines Maximalwertes bleibt.

3. Verfahren nach Anspruch 2, **dadurch gekennzeichnet, dass** die Impulsdauer (t_0) als eine Funktion der Umgebungstemperatur und der Spannung der Fahrzeugbatterie ermittelt wird.

4. Verfahren nach einem der Ansprüche 1 bis 3, **dadurch gekennzeichnet, dass** das Mengensteuerventil (18) während der Förderphase (22) der Hochdruckpumpe (2) mit Impulsen einer bestimmten Impulsdauer (t_0) und einer bestimmten Impulsfrequenz angesteuert wird, wobei die Impulsdauer (t_0) und die Impulsfrequenz derart gewählt werden, dass der auf der Hochdruckseite (HD) der Hochdruckpumpe (2) herrschende Druck nicht oder lediglich kurzzeitig geringfügig ansteigt.

5. Verfahren nach einem der Ansprüche 1 bis 4, **dadurch gekennzeichnet, dass** das Mengensteuerventil (18) nach Erreichen der Leerlaufdrehzahl der Brennkraftmaschine für eine bestimmte Ansteuerdauer (t_W) dauerangesteuert wird.

6. Verfahren nach Anspruch 5, **dadurch gekennzeichnet, dass** die Ansteuerdauer (t_W) als eine Funktion der Umgebungstemperatur und der Spannung der Fahrzeugbatterie ermittelt wird.

7. Verfahren nach einem der Ansprüche 1 bis 6, **dadurch gekennzeichnet, dass** die Ansteuerung mit den Impulsen bzw. die Daueransteuerung des Mengensteuerventils (18) beendet wird, sobald der Spulenwiderstand einen vorgegebenen Widerstandswert überschritten hat, wobei der Spulenwiderstand über ein applikationsspezifisches Kennfeld auf Basis der Identifikationsgrößen Batteriespannung und Umgebungstemperatur ermittelt wird.

8. Verfahren nach einem der Ansprüche 1 bis 7, **dadurch gekennzeichnet, dass** das Mengensteuerventil (18) bei einer Drehzahl der Brennkraftmaschine oberhalb einer vorgegebenen Grenzdrehzahl dauerangesteuert wird.

9. Verfahren nach Anspruch 8, **dadurch gekennzeichnet, dass** die Grenzdrehzahl bei einer Drehzahl von 6.800 U/min gewählt wird.

10. Verfahren nach Anspruch 8, **dadurch gekennzeichnet, dass** die Grenzdrehzahl als eine Funktion der Spannung der Fahrzeugbatterie ermittelt wird.

11. Verfahren nach einem der Ansprüche 8 bis 10, **dadurch gekennzeichnet, dass** das Mengensteuerventil (18) bei einer Drehzahl der Brennkraftmaschine oberhalb der Grenzdrehzahl im Anschluss an die Förderphase (22) der Hochdruckpumpe (2) für eine bestimmte Taktdauer (t_T) mit einer bestimmten Taktfrequenz getaktet angesteuert wird.

12. Verfahren nach Anspruch 11, **dadurch gekennzeichnet, dass** die Taktdauer (t_T) und/oder die Taktfrequenz als eine Funktion der Drehzahl der Brennkraftmaschine ermittelt wird.

13. Verfahren nach Anspruch 12, **dadurch gekennzeichnet, dass** die Taktdauer (t_T) bei steigender Drehzahl der Brennkraftmaschine kleiner gewählt wird.

14. Verfahren nach Anspruch 12, **dadurch gekennzeichnet, dass** die Taktfrequenz bei steigender Drehzahl der Brennkraftmaschine größer gewählt wird.

15. Verfahren nach einem der Ansprüche 8 bis 14, **dadurch gekennzeichnet, dass** das Mengensteuerventil (18) in der Förderphase (22) der Hochdruckpumpe (2) nach einer bestimmten Förderdauer (t_P) mit einer bestimmten Taktfrequenz getaktet angesteuert wird.

16. Verfahren nach Anspruch 15, **dadurch gekennzeichnet, dass** die bestimmte Förderdauer (t_P) als eine Funktion der Drehzahl der Brennkraftmaschine ermittelt wird.

17. Verfahren nach einem der Ansprüche 11 bis 16, **dadurch gekennzeichnet, dass** die Taktfrequenzen über eine adaptive Regelung unter Einbeziehung des auf der Hochdruckseite (HD) der Hochdruckpumpe (2) herrschenden Drucks eingestellt werden.

18. Verfahren nach einem der Ansprüche 8 bis 17, **dadurch gekennzeichnet, dass** der Ansaugquerschnitt eines Einlassventils (15) der Hochdruckpumpe (2) zumindest bei einer Drehzahl der Brennkraftmaschine oberhalb der vorgegebenen Grenzdrehzahl derart ausgebildet wird, dass ein Saugdrosseleffekt auftritt.

19. Einrichtung zum Ansteuern eines elektromagnetischen Mengensteuerventils (18) zur Bedarfssteuerung einer Hochdruckpumpe (2) eines Kraftstoffversorgungssystems einer Brennkraftmaschine, **dadurch gekennzeichnet, dass** die Einrichtung eine Schaltendstufe zum Ansteuern des Mengensteuerventils (18) nach dem Einschalten der Zündung der Brennkraftmaschine zu bestimmten Zeitpunkten für eine bestimmte Zeitdauer mit Impulsen aufweist.

20. Einrichtung nach Anspruch 19, **dadurch gekennzeichnet, dass** die Einrichtung Mittel zur Durchführung des Verfahrens nach einem der Ansprüche 1 bis 18 aufweist.

## Claims

1. Method for actuating an electromagnetic quantity control valve (18) for controlling the demand of a high-pressure pump (2) of a fuel supply system of an internal combustion engine, **characterized in that** the quantity control valve (18) is actuated by means of pulses at specific times for a specific time period using a switching output stage after the ignition system of the internal combustion engine has been switched on.

2. Method according to Claim 1, **characterized in that** the quantity control valve (18) is actuated by means of pulses with a specific pulse length (t_0) and a specific pulse frequency during the intake phase of the high-pressure pump (2), the pulse length (t_0) and the pulse frequency being selected in such a way that the control current flowing through the solenoid of the quantity control valve (18) always remains below its maximum value.

3. Method according to Claim 2, **characterized in that** the pulse length (t_0) is determined as a function of the ambient temperature and the voltage of the vehicle battery.

4. Method according to one of Claims 1 to 3, **characterized in that** the quantity control valve (18) is actuated by means of pulses with a specific pulse length (t_0) and a specific pulse frequency during the delivery phase (22) of the high-pressure pump (2), the pulse length (t_0) and the pulse frequency being selected such that the pressure prevailing on the high-pressure side (HD) of the high-pressure pump (2) does not rise, or only rises slightly for a brief time.

5. Method according to one of Claims 1 to 4, **characterized in that** the quantity control valve (18) is permanently actuated for a specific actuation period (t_W) after the idling speed of the internal combustion engine has been reached.

6. Method according to Claim 5, **characterized in that** the actuation period (t_W) is determined as a function of the ambient temperature and the voltage of the vehicle battery.

7. Method according to one of Claims 1 to 6, **characterized in that** the actuation by means of the pulses or the permanent actuation of the quantity control valve (18) is terminated as soon as the coil resistance has exceeded a predefined resistance value, the coil resistance being determined by means of an application-specific characteristic diagram on the basis of the battery voltage and ambient temperature identification variables.

8. Method according to one of Claims 1 to 7, **characterized in that** the quantity control valve (18) is permanently actuated when the rotational speed of the internal combustion engine is above a predefined limiting rotational speed.

9. Method according to Claim 8, **characterized in that** the limiting rotational speed is selected to be a rotational speed of 6,800 rpm.

10. Method according to Claim 8, **characterized in that** the limiting rotational speed is determined as a function of the voltage of the vehicle battery.

11. Method according to one of Claims 8 to 10, **characterized in that** the quantity control valve (18) is actuated in a clocked fashion with a specific clock frequency for a specific clocking period (t_T) when the rotational speed of the internal combustion engine is above the limiting rotational speed subsequent to the delivery phase (22) of the high-pressure pump (2).

12. Method according to Claim 11, **characterized in that** the clocking period (t_T) and/or the clock frequency are determined as a function of the rotational speed of the internal combustion engine.

13. Method according to Claim 12, **characterized in that** the clocking period (t_T) is selected to be shorter when the rotational speed of the internal combustion engine rises.

14. Method according to Claim 12, **characterized in that** the clocking frequency is selected to be higher when the rotational speed of the internal combustion engine rises.

15. Method according to one of Claims 8 to 14, **characterized in that** the quantity control valve (18) is actuated in a clocked fashion with a specific clock frequency in the delivery phase (22) of the high-pressure pump (2) after a specific delivery period (t_P).

16. Method according to Claim 15, **characterized in that** the specific delivery period (t_P) is determined as a function of the rotational speed of the internal combustion engine.

17. Method according to one of Claims 11 to 16, **characterized in that** the clock frequencies are set by means of an adaptive control including the pressure prevailing on the high-pressure side (HD) of the high-pressure pump (2).

18. Method according to one of Claims 8 to 17, **characterized in that** the intake cross section of an inlet valve (15) of the high-pressure pump (2) is embodied, at least when the rotational speed of the internal combustion engine is above the predefined limiting rotational speed, in such a way that an intake throttle effect occurs.

19. Device for actuating an electromagnetic quantity control valve (18) for controlling the demand of a high-pressure pump (2) of a fuel supply system of an internal combustion engine, **characterized in that** the device has a switching output stage for actuating the quantity control valve (18) by means of pulses at specific times for a specific time period after the ignition system of the internal combustion engine has been switched on.

20. Device according to Claim 19, **characterized in that** the device has means for carrying out the method according to one of Claims 1 to 18.

## Revendications

1. Procédé pour commander une vanne électromagnétique de régulation (18) pour la commande de la consommation d'une pompe haute pression (2) d'un système d'alimentation en carburant d'un moteur à combustion interne,
**caractérisé en ce que**
la vanne électromagnétique de régulation (18) est commandée par impulsions à l'aide d'un étage final de commutation après la mise en marche de l'allumage du moteur à combustion interne à des moments définis pour une durée définie.

2. Procédé selon la revendication 1,
**caractérisé en ce que**
la vanne électromagnétique de régulation (18) est commandée, pendant la phase d'aspiration de la pompe haute pression (2), par des impulsions d'une certaine durée (t_0) et d'une certaine fréquence, la durée (t_0) et la fréquence étant sélectionnées de telle sorte que le courant de commande dans la bobine d'excitation de la vanne électromagnétique de régulation (18) reste toujours inférieur à sa valeur maximale.

3. Procédé selon la revendication 2,
**caractérisé en ce que**
la durée (t_0) est déterminée comme une fonction de la température ambiante et de la tension de la batterie du véhicule.

4. Procédé selon l'une quelconque des revendications 1 à 3,
**caractérisé en ce que**
la vanne électromagnétique de régulation (18) est commandée, pendant la phase d'alimentation (22) de la pompe haute pression (2), par des impulsions d'une certaine durée (t_0) et d'une certaine fréquence, la durée (t_0) et la fréquence étant sélectionnées de telle sorte que la pression régnant sur le côté de haute pression (HD) de la pompe haute pression (2) n'augmente pas ou seulement de manière minime pendant un court instant.

5. Procédé selon l'une quelconque des revendications 1 à 4,
**caractérisé en ce que**
la vanne électromagnétique de régulation (18) est commandée de façon continue après avoir atteint la vitesse nominale du moteur à combustion interne pour une certaine durée de commande (t_W).

6. Procédé selon la revendication 5,
**caractérisé en ce que**
la durée de commande (t_W) est déterminée comme une fonction de la température ambiante et de la tension de la batterie du véhicule.

7. Procédé selon l'une quelconque des revendications 1 à 6,
**caractérisé en ce que**
la commande par les impulsions, respectivement la commande en continu, de la vanne électromagnétique de régulation (18) est terminée dès que la résistance de la self a dépassé une valeur prédéfinie, la résistance de self étant déterminée à l'aide d'un champ caractéristique spécifique à l'application sur la base des grandeurs d'identification de la tension de batterie et de la température ambiante.

8. Procédé selon l'une quelconque des revendications 1 à 7,
**caractérisé en ce que**
la vanne électromagnétique de régulation (18) est commandée en continu lorsque la vitesse du moteur à combustion interne est supérieure à une vitesse limite prédéfinie.

9. Procédé selon la revendication 8,
**caractérisé en ce que**
la vitesse limite est sélectionnée pour une vitesse de 6.800 t/min.

10. Procédé selon la revendication 8,
**caractérisé en ce que**
la vitesse limite est déterminée comme une fonction de la tension de la batterie du véhicule.

11. Procédé selon l'une quelconque des revendications 8 à 10,
**caractérisé en ce que**
la vanne électromagnétique de régulation (18) est commandée de manière cadencée à une certaine cadence lorsque la vitesse du moteur à combustion interne est supérieure à la vitesse limite à la suite de la phase d'alimentation (22) de la pompe haute pression (2), pour une certaine durée du cycle (t_T).

12. Procédé selon la revendication 11,
**caractérisé en ce que**
la durée du cycle (t_T) et/ou la cadence est déterminée comme une fonction de la vitesse du moteur à combustion interne.

13. Procédé selon la revendication 12,
**caractérisé en ce que**
la durée du cycle (t_T) est sélectionnée inférieure lorsque la vitesse du moteur à combustion interne augmente.

14. Procédé selon la revendication 12,
**caractérisé en ce que**
la cadence est sélectionnée plus grande lorsque la vitesse du moteur à combustion interne augmente.

15. Procédé selon l'une quelconque des revendications 8 à 14,
**caractérisé en ce que**
la vanne électromagnétique de régulation (18) est commandée de manière cadencée à une certaine cadence dans la phase d'alimentation (22) de la pompe haute pression (2) après une certaine durée d'alimentation (t_P).

16. Procédé selon la revendication 15,
**caractérisé en ce que**
la durée d'alimentation (t_P) est déterminée comme une fonction de la vitesse du moteur à combustion interne.

17. Procédé selon l'une quelconque des revendications 11 à 16,
**caractérisé en ce que**
les cadences sont réglées à l'aide d'un réglage adaptatif y compris la pression régnant sur le côté haute pression (HD) de la pompe haute pression (2).

18. Procédé selon l'une quelconque des revendications 8 à 17,
**caractérisé en ce que**
la section d'aspiration d'une soupape d'admission (15) de la pompe haute pression (2) est formée, au moins lorsque la vitesse du moteur à combustion interne est supérieure à la vitesse limite prédéfinie, de telle manière qu'il se produit un effet d'étranglement d'aspiration.

19. Dispositif pour commander une vanne électromagnétique de régulation (18) pour la commande de la consommation d'une pompe haute pression (2) d'un système d'alimentation en carburant d'un moteur à combustion interne,
**caractérisé en ce que**
le dispositif présente un étage final de commutation pour commander par impulsions la vanne électromagnétique de régulation (18) après la mise en marche de l'allumage du moteur à combustion interne à des moments définis pour une durée définie.

20. Dispositif selon la revendication 19,
**caractérisé en ce que**
le dispositif présente des moyens pour réaliser le procédé selon l'une quelconque des revendications 1 à 18.
